# EUROPÄISCHE PATENTSCHRIFT

(11) **EP 2 600 015 B1**
(45) Veröffentlichungstag und Bekanntmachung des Hinweises auf die Patenterteilung: **15.04.2015**
(21) Anmeldenummer: 12188782.2
(22) Anmeldetag: 17.10.2012
(51) Int. Cl.: F16C 17/14, H01M 8/04, F16C 32/06, F16N 15/04

(54) **Turboverdichter, Brennstoffzellensystem**
Turbo-compressor, fuel cell system
Turbocompresseur, système de piles à combustible

(30) Priorität: 01.12.2011 DE 102011087601
(43) Veröffentlichungstag der Anmeldung: 05.06.2013
(73) Patentinhaber: ROBERT BOSCH GMBH, 70442 Stuttgart (DE)
(72) Erfinder: Stein, Matthias, 70825 Korntal-Muenchingen (DE); Steidten, Thomas, 71636 Ludwigsburg (DE)

(56) Entgegenhaltungen:
- EP-A1- 2 305 981
- EP-A2- 0 270 921
- EP-A2- 1 321 680
- EP-A2- 1 500 804
- DE-A1-102009 051 560
- JP-A- 2005 163 641
- JP-A- 2006 242 008
- US-A1- 2010 111 681

## Beschreibung

Die Erfindung betrifft einen Turboverdichter für ein Brennstoffzellensystem, mit einem Verdichterrad, das drehfest auf einer Welle angeordnet ist, wobei die Welle in einem Gehäuse mittels mindestens eines hydrodynamischen oder hydrostatischen Gleitlagers drehbar gelagert ist.

Ferner betrifft die Erfindung ein Brennstoffzellensystem.

### Stand der Technik

Eine mit reinem Wasserstoff betriebene Brennstoffzelle gilt heute als Antrieb der Zukunft, da sie nur reinen Wasserdampf emittiert. Ähnlich wie bei konventionellen Verbrennungsmotoren lässt sich bei Brennstoffzellen die Leistungsdichte steigern und das Wärmemanagement verbessern, wenn diese aufgeladen, also mit Druckluft betrieben wird. Zur Bereitstellung der Druckluft wird ein Aufladeaggregat benötigt, das meist als Turboverdichter ausgebildet ist, da dieser einen besonders guten Wirkungsgrad bei kleinem Bauraum bietet. Ein derartiger Turboverdichter weist ein Verdichterrad in einem Verdichtergehäuse auf, das drehfest auf einer drehbar gelagerten Welle angeordnet ist. Zum Antreiben des Verdichterrads, kann beispielsweise ein Elektromotor vorgesehen sein oder eine Turbine, die mit der Welle wirkverbunden ist und vom Abgas der Brennstoffzelle angetrieben wird.

Charakteristisch für Turboverdichter sind die hohen Drehzahlen, mit denen sie betrieben werden müssen, um gute Wirkungsgrade beziehungsweise Druckverhältnisse zu erreichen. In heutigen Kraftfahrzeug-Verbrennungsmotoren erreichen Abgasturbolader Drehzahlen von bis zu 300.000 U/min. Da das Anforderungsprofil einer Brennstoffzelle in Bezug auf Luftmenge und Druckverhältnis ähnlich dem eines Verbrennungsmotors ist, sind hier entsprechende Drehzahlen anzustreben. Mit zunehmender Drehzahl steigen jedoch auch die Anforderungen an die Lagerung der Welle. Bei Verbrennungsmotoren werden hierzu hydrodynamische Öl-Gleitlager verwendet, die jedoch bei Brennstoffzellen nicht angewandt werden können, da die der Brennstoffzelle zugeführte Luft absolut ölfrei sein sollte, da das Öl die Membran der Brennstoffzelle zerstören kann. Darüber hinaus steht bei Brennstoffzellen-Antriebssystemen auch kein Ölkreislauf zur Verfügung, der bei einem Verbrennungsmotor ohnehin vorhanden wäre und entsprechend genutzt werden könnte. Ein Turboverdichter gemäß dem Oberbegriff des Anspruchs 1 ist in DE 10 2009 051560 A1 offenbart.

### Offenbarung der Erfindung

Der erfindungsgemäße Turboverdichter mit den Merkmalen des Anspruchs 1 hat den Vorteil, dass für die Welle eine Gleitlagerung geboten wird, die vergleichsweise geringe Reibwerte aufweist und auch Drehzahlen von bis zu 300.000 U/min ermöglicht. Der erfindungsgemäße Turboverdichter sieht dazu vor, dass in dem Gleitlager als Flüssigkeit zur Reibminderung Wasser vorgesehen ist. Erfindungsgemäß ist somit eine hydrostatische oder hydrodynamische Wasserlagerung der Welle in dem Gehäuse des Turboverdichters vorgesehen. Die derart gebildete hydrostatische oder hydrodynamische Lagerung der Welle ist einfachen Wälzlagern überlegen und erreicht die gewünschten hohen Drehzahlen. Die Viskosität von Wasser ist um etwa zwei Größenordnungen größer als die von Luft, sodass die notwendigen Lagerflächen signifikant kleiner sind als die Lagerflächen, die bei einem Luftlager vorgesehen werden müssten. Durch die Verwendung von Wasser kann die der Brennstoffzelle zugeführte Luft auch nicht mit Öl verunreinigt werden.

Erfindungsgemäß weist der Turboverdichter ein Wasserleitsystem auf, das das Gleitlager mit Wasser, insbesondere mit Kühlwasser versorgt. Dadurch wird gewährleistet, dass stets ein Wasserfilm in dem Gleitlager zur Reibminderung zur Verfügung steht und dass das hydrostatische beziehungsweise hydrodynamische Gleitlager eine hohe Lebensdauer erreicht.

Erfindungsgemäß führt das Wasserleitsystem Wasser zur Kühlung zu einer Leistungselektronik des Elektromotors, sodass auch von der Leistungselektronik in vorteilhafter Weise Wärme abführbar ist/abgeführt wird.

Besonders bevorzugt ist vorgesehen, dass das Wasserleitsystem mindestens eine Fördereinrichtung, insbesondere eine Förderpumpe aufweist. Die Fördereinrichtung ist zweckmäßigerweise als Flüssigkeits-Fördereinrichtung ausgebildet und fördert das Wasser mit einem ausreichenden Druck in dem Wasserleitsystem.

Gemäß einer vorteilhaften Weiterbildung der Erfindung ist vorgesehen, dass das Wasserleitsystem als Kühlwasserkreislauf ausgebildet oder in einen Kühlwasserkreislauf eines Brennstoffzellensystems integrierbar/integriert ist. Der Kühlwasserkreislauf weist zweckmäßigerweise wenigstens eine Kühlvorrichtung zum Kühlen des geförderten Wassers auf, welches insofern Kühlwasser darstellt. Hierdurch wird gleichzeitig eine vorteilhafte Wärmeabfuhr aus dem Gleitlager beziehungsweise ein Kühlen des Gleitlagers gewährleistet. Der Turboverdichter, insbesondere das Gehäuse des Turboverdichters, weist zur Einbindung in den Kühlwasserkreislauf des Brennstoffzellensystems zweckmäßigerweise entsprechende Eintritts- und Austrittsöffnungen für das Kühlwasser beziehungsweise das Wasser auf. Die Fördereinrichtung kann außen an dem Gehäuse angebracht oder in das Gehäuse integriert angeordnet sein. Auch ist es denkbar, als Fördereinrichtung die Fördereinrichtung des externen Kühlwasserkreislaufs des Brennstoffzellensystems zu nutzen, sodass der Turboverdichter selbst keine eigene Fördereinrichtung bereitstellen muss.

Bevorzugt weist der Turboverdichter einen Elektromotor zum Antreiben der Welle beziehungsweise des Verdichterrades auf.

Gemäß einer vorteilhaften Weiterbildung der Erfindung weist das Gehäuse mindestens einen Kanal zum Leiten des Wassers zu dem Gleitlager und/oder zu der Leistungselektronik auf. Der Kanal kann dabei abschnittsweise von dem Gehäuse selbst, beispielsweise in Form einer Bohrung oder dergleichen, gebildet sein, oder von zusätzlichen Schlauch- oder Rohrelementen gebildet werden. Das dem Gleitlager oder der Leistungselektronik zugeführte (Kühl-)Wasser sammelt sich beispielsweise anschließend in einem Auffangbecken des Gehäuses, um von dort dem (Kühl-)Wasserkreislauf zurückgeführt zu werden.

Vorzugweise ist der Kanal zumindest abschnittsweise als Kühlmantel, insbesondere den Stator umgebend, ausgebildet. Der Kühlmantel kann zweckmäßigerweise in das Gehäuse integriert werden, also einstückig von diesen ausgebildet sein, und umfängt den Stator zumindest abschnittsweise an seiner Mantelaußenfläche, um die Wärme vorteilhaft von dem Stator durch das Gehäuse in das Wasser beziehungsweise Kühlwasser abzuführen.

Vorzugweise wird das Wasser von dem Gleitlager in den Kühlmantel oder von dem Kühlmantel in das Gleitlager geleitet beziehungsweise geführt. Hierbei ist also ein sequentielles Kühlen der Komponenten des Turboverdichters vorgesehen.

Alternativ wird das Wasser dem Gleitlager und dem Kühlmantel parallel zugeführt. Hierzu weist der Kühlwasserkreislauf zweckmäßigerweise eine entsprechende Abzweigung auf, in welcher ein erster Kühlwasserteilstrom dem Gleitlager und ein zweiter Kühlwasserteilstrom dem Kühlmantel zugeführt wird.

Das erfindungsgemäße Brennstoffzellensystem zeichnet sich durch einen Turboverdichter aus, wie er obenstehend beschrieben wurde. Besonders bevorzugt ist der Turboverdichter beziehungsweise der Wasserleitsystem des Turboverdichters in einem Kühlkreislauf des Brennstoffzellensystems integriert beziehungsweise eingebunden. Das Brennstoffzellensystem weist dabei bevorzugt eine Fördereinrichtung zum Fördern des Kühlwassers durch den Kühlwasserkreislauf und damit durch das Wasserleitsystem des Turboverdichters auf. Das erfindungsgemäße Brennstoffzellensystem hat den Vorteil, dass eine Verunreinigung der in die Brennstoffzelle geführten Druckluft nicht zu einer Beschädigung der Brennstoffzelle führt, wobei gleichzeitig hohe Drehzahlen erreicht und die Wärme von dem zumindest einen Gleitlager und/oder der Leistungselektronik abgeführt wird.

Im Folgenden soll die Erfindung anhand der Zeichnung näher erläutert werden. Dazu zeigen:
- Figur 1: ein erstes Ausführungsbeispiel eines Turboverdichters eines Brennstoffzellensystems in einer schematischen Darstellung, und
- Figur 2: ein zweites Ausführungsbeispiel des Turboverdichters in einer schematischen Darstellung.

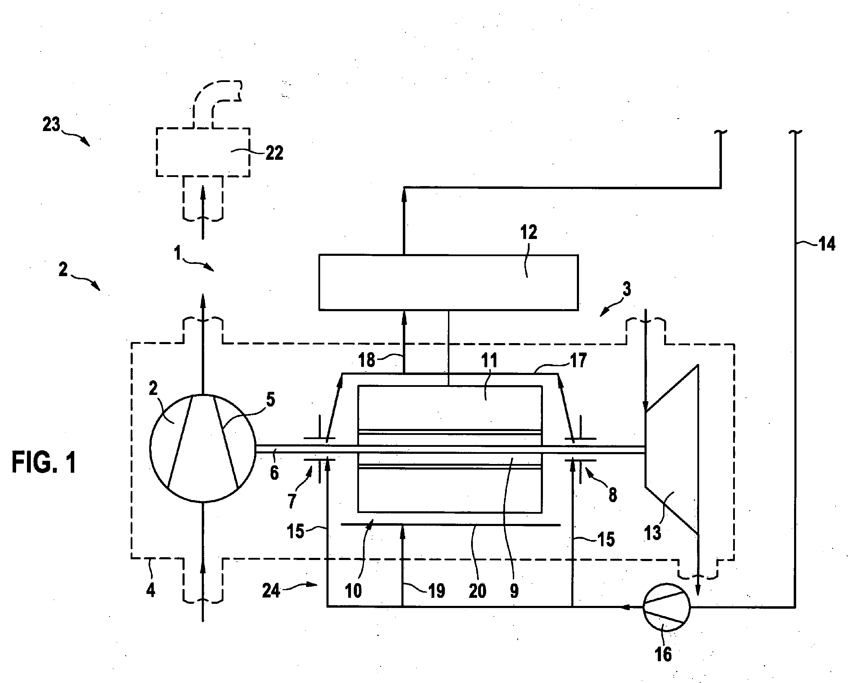

Figur 1 zeigt in einer schematischen Darstellung einen Turboverdichter 1, der einen Verdichter 2 sowie eine Antriebseinheit 3 aufweist, die in einem Gehäuse 4 (hier nur gestrichelt angedeutet) angeordnet sind.

Der Verdichter 2 weist ein Verdichterrad 5, hier nur schematisch dargestellt, auf, das drehfest auf einer Welle 6 angeordnet ist. Die Welle 6 ist wiederum drehbar in dem Gehäuse 4 gelagert. Hierzu sind Gleitlager 7, 8 vorgesehen, die als Radiallager ausgebildet sind, sowie ein hier nicht dargestelltes Axiallager, das gegebenenfalls in eines der Gleitlager 7, 8 integriert ist. Zwischen den Gleitlagern 7 und 8 sitzt auf der Welle 6 weiterhin ein Rotor 9 einer elektrischen Maschine 10, die weiterhin einen Stator 11 aufweist, der drehfest an dem Gehäuse 4 gehalten ist. Dem Stator 11 ist darüber hinaus eine Leistungselektronik 12 zugeordnet, die zum Betreiben der elektrischen Maschine 10 dient. Auf dem dem Verdichter 2 gegenüberliegenden Ende der Welle 6 ist darüber hinaus optional eine Turbine mit einem Turbinenrad 13 angeordnet.

Der Turboverdichter 1 ist Bestandteil eines wenigstens eine Brennstoffzelle 22 aufweisenden Brennstoffzellensystems 23, von dem hier nur eine Brennstoffzelle 22 angedeutet ist, und versorgt das Brennstoffzellensystem 23 beziehungsweise die wenigstens eine Brennstoffzelle 22 mittels des Verdichters 2 mit einem Druckluftstrom. Um ausreichend hohe Drehzahlen zu gewährleisten, sind die Gleitlager 7, 8 als hydrostatische oder hydrodynamische Gleitlager ausgebildet, bei welchen als Fluid zur Reibwertminderung nicht wie sonst üblich Öl, sondern Wasser, insbesondere Kühlwasser vorgesehen ist. Dabei ist in dem vorliegenden Ausführungsbeispiel der Turboverdichter 1 in einen Kühlkreislauf 14 des Brennstoffzellensystems 23 integriert. Der Turboverdichter 1 weist hierzu mehrere Kanäle 14 eines Wasserleitsystems 24 auf, die das Kühlwasser des Kühlwasserkreislaufs 14 direkt zu den Gleitlagern 7, 8 führt. Das Kühlwasser wird dabei mittels einer Fördereinrichtung 16 druckbeaufschlagt den Gleitlagern 7, 8 zugeführt. Vorteilhafterweise liegt der Druck 0,5 bar bis 5 bar oberhalb des Umgebungsdrucks. Das Kühlwasser strömt anschließend aus den Gleitlagern mit geringerem Druck heraus und gelangt vorzugsweise zu einem Sammelbecken 17 im Rumpf des Gehäuses 4. Vorzugsweise an der tiefsten Stelle wird das Kühlwasser aus dem Becken entnommen und durch einen weiteren Kanal 18 des Wasserleitsystems 24 des Turboverdichters 1 dem Kühlwasserkreislauf 14 des Brennstoffzellensystems 23 zurückgeführt.

Vorzugweise ist druckseitig ein weiterer Kanal 19 vorgesehen, welcher das unter Druck stehende Kühlwasser/Wasser einem Kühlmantel 20 des Stators 11 zuführt. Das Kühlwasser tritt aus dem Kühlmantel 20 im Bereich des Sammelbeckens 17 aus dem Kühlmantel 20 wieder heraus und wird somit dem Kanal 18 und dem Kühlwasserkreislauf 14 zurückgeführt. Der Kanal 18 führt dabei durch die Leistungselektronik 12.

Im Betrieb werden somit durch das Kühlwasser die Gleitlager 7, 8, der Stator 11 oder die Leistungselektronik 12 gekühlt, wobei die Leistungselektronik 12 erst nach den Gleitlagern 7, 8 und dem Stator 11 von dem Kühlwasser beaufschlagt wird.

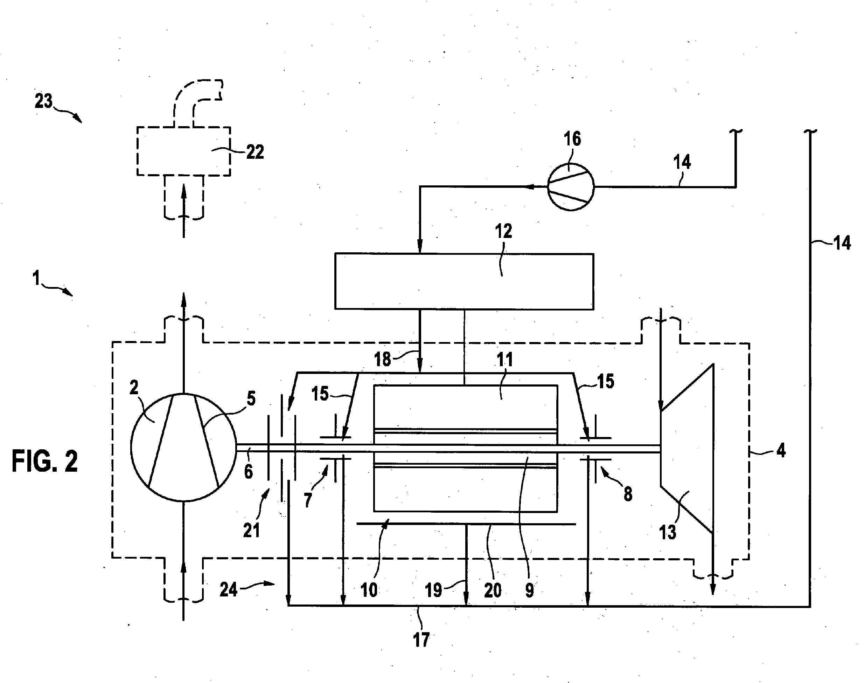

Figur 2 zeigt ein zweites Ausführungsbeispiel des Turboverdichters 1, wobei bereits bekannte Elemente mit den gleichen Bezugszeichen versehen sind, sodass insofern auf die obenstehende Beschreibung verwiesen wird. Im Folgenden soll im Wesentlichen nur auf die Unterschiede eingegangen werden.

Im Unterschied zu dem vorhergehenden Ausführungsbeispiel ist in dem zweiten Ausführungsbeispiel die Strömungsrichtung des Kühlwasserkreislaufs umgekehrt, sodass zuerst die Leistungselektronik 12 und anschließend die Gleitlager 7, 8 sowie der Kühlmantel 20 von dem Kühlwasser durchbeziehungsweise umströmt wird. Insbesondere ist dabei vorgesehen, dass das Kühlwasser zunächst den Kühlmantel 20 durchströmt und dann den Gleitlagern 7, 8 zugeführt wird.

Optional kann in beiden Ausführungsbeispielen ein weiteres Gleitlager 21 vorgesehen sein, das als hydrodynamisches oder hydrostatisches Axiallager für die Welle 6 ausgebildet ist und ebenfalls mit dem Wasser, insbesondere mit dem Kühlwasser des Kühlkreislaufs 14 versorgt wird.

Beide Ausführungsbeispiele führen dazu, dass eine günstige Wärmeabfuhr aus den Gleitlagern 7, 8, 21, dem Stator 11 und der Leistungselektronik 12 gewährleistet wird. Darüber hinaus wird es durch die Hydro-Lager 7, 8 und gegebenenfalls 21 ermöglicht, auch Drehzahlbereiche von bis zu 300.000 U/min sicher darstellen zu können. Im Vergleich zu herkömmlichen Wälzlagerungen, fallen geringere Kosten aufgrund der einfacheren Bauteile an, und es werden ein höheres Drehzahlniveau, ein besseres Kaltstartverhalten sowie Vorteile im Wärmehaushalt durch eine effiziente Rotorkühlung erreicht. Im Vergleich zu einer einfachen Luftlagerung ist ein geringerer Bauraum notwendig, der Wärmehaushalt verbessert und es ist keine sogenannte Zapfluft, die stromabwärts des Verdichters 2 abgezweigt werden oder durch einen externen Kompressor bereitgestellt werden müsste, notwendig.

Alternativ zu den dargestellten Ausführungsbeispielen ist es auch denkbar, das Kühlwasser zunächst dem Kühlmantel 20, anschließend den Gleitlagern 7, 8 oder 21 und erst anschließend der Leistungselektronik 12 zuzuführen. Die Kanäle 15, 18 und 19 sind vorzugsweise in das Gehäuse 4 integriert ausgebildet oder werden durch separate Rohr- oder Schlauchelemente gebildet. Dabei können die Kanäle vollständig innerhalb des Gehäuses liegen oder teilweise auch nach außerhalb führen. Die Fördereinrichtung 16, die zweckmäßigerweise als Flüssigkeitspumpe ausgebildet ist, kann ebenfalls als Bestandteil des Turboverdichters 1 innerhalb des Gehäuses 4 angeordnet sein.

## Patentansprüche

1. Turboverdichter (1) für ein Brennstoffzellensystem (23) mit einem Verdichterrad (5), das drehfest auf einer Welle (6) angeordnet ist, wobei die Welle (6) in einem Gehäuse (4) mittels mindestens eines hydrodynamischen oder hydrostatischen Gleitlagers (7,8,21) drehbar gelagert ist, wobei in dem Gleitlager (7,8,21) als Flüssigkeit zur Reibwertminderung Wasser vorgesehen ist und der Turboverdichter ein Wasserleitsystem (24) aufweist, das den Gleitlagern Wasser zuführt, **dadurch gekennzeichnet, dass** das Wasserleitsystem einer zum Turboverdichter (1) gehörenden Leistungselektronik (12) einer die Welle (6) antreibenden elektrischen Maschine (10) des Turboverdichters (1) Wasser zur Kühlung zuführt.

2. Turboverdichter nach Anspruch 1, **dadurch gekennzeichnet, dass** das Wasserleitsystem (24) den Gleitlagern druckbeaufschlagtes Wasser zuführt.

3. Turboverdichter nach einem der vorhergehenden Ansprüche, **dadurch gekennzeichnet, dass** das Wasserleitsystem (24) mindestens eine Fördereinrichtung (16), insbesondere Förderpumpe, aufweist.

4. Turboverdichter nach einem der vorhergehenden Ansprüche, **dadurch gekennzeichnet, dass** das Wasserleitsystem (24) als Kühlwasserkreislauf ausgebildet oder in einen Kühlwasserkreislauf (14) eines Brennstoffzellensystems (23) integriert/integrierbar ist.

5. Turboverdichter nach einem der vorhergehenden Ansprüche, **dadurch gekennzeichnet, dass** das Verdichtergehäuse (5) mindestens einen Kanal (15,18,19) zum Leiten des Wassers zu den Gleitlagern (7,8,21) und insbesondere auch zu der Leistungselektronik (12) aufweist.

6. Turboverdichter nach einem der vorhergehenden Ansprüche, **dadurch gekennzeichnet, dass** der mindestens eine Kanal (15,18,19) zumindest abschnittsweise als Kühlmantel (20), insbesondere einen Stator (11) der elektrischen Maschine (10) umgebend, ausgebildet ist.

7. Turboverdichter nach Anspruch 6, **dadurch gekennzeichnet, dass** das Wasser von dem Gleitlager (7,8,21) in den Kühlmantel (20) oder von dem Kühlmantel (20) in das Gleitlager (7,8,21) geleitet wird.

8. Turboverdichter nach Anspruch 6, **dadurch gekennzeichnet, dass** das Wasser parallel in das Gleitlager (7,8,21) und den Kühlmantel (20) geleitet wird.

9. Brennstoffzellensystem (23) mit einem Turboverdichter (1) nach einem oder mehreren der vorhergehenden Ansprüche.

## Claims

1. Turbocompressor (1) for a fuel cell system (23) with a compressor wheel (5) which is arranged rotationally fixed on a shaft (6), wherein the shaft (6) is mounted rotatably in a casing (4) by means of at least one hydrodynamic or hydrostatic sliding bearing (7, 8, 21), wherein water is provided in the sliding bearing (7, 8, 21) as a fluid for reducing friction and the turbocompressor has a water supply system (24) which supplies water to the sliding bearings, **characterized in that** the water supply system supplies water, for cooling, to power electronics (12), belonging to the turbocompressor (1), of an electric machine (10) of the turbocompressor (1) which drives the shaft (6).

2. Turbocompressor according to Claim 1, **characterized in that** the water supply system (24) supplies pressurized water to the sliding bearings.

3. Turbocompressor according to either of the preceding claims, **characterized in that** the water supply system (24) has at least one delivery device (16), in particular a delivery pump.

4. Turbocompressor according to one of the preceding claims, **characterized in that** the water supply system (24) is designed as a cooling water circuit or is/can be integrated into a cooling water circuit (14) of a fuel cell system (23).

5. Turbocompressor according to one of the preceding claims, **characterized in that** the compressor casing (4) has at least one duct (15, 18, 19) for supplying the water to the sliding bearings (7, 8, 21) and in particular also to the power electronics (12).

6. Turbocompressor according to one of the preceding claims, **characterized in that** the at least one duct (15, 18, 19) is designed at least in sections as a cooling jacket (20), in particular a stator (11) surrounding the electric machine (10).

7. Turbocompressor according to Claim 6, **characterized in that** the water is supplied from the sliding bearing (7, 8, 21) into the cooling jacket (20) or from the cooling jacket (20) into the sliding bearing (7, 8, 21).

8. Turbocompressor according to Claim 6, **characterized in that** the water is supplied in parallel into the sliding bearing (7, 8, 21) and into the cooling jacket (20).

9. Fuel cell system (23) having a turbocompressor (1) according to one or more of the preceding claims.

## Revendications

1. Turbocompresseur (1) pour un système de piles à combustible (23) comprenant une roue de compresseur (5) qui est disposée de manière solidaire en rotation sur un arbre (6), l'arbre (6) étant supporté à rotation dans un boîtier (4) au moyen d'au moins un palier lisse hydrodynamique ou hydrostatique (7, 8, 21), de l'eau étant prévue dans le palier lisse (7, 8, 21) en tant que liquide pour réduire le coefficient de frottement et le turbocompresseur présentant un système de conduite d'eau (24) qui achemine de l'eau aux paliers lisses, **caractérisé en ce que** le système de conduite d'eau achemine de l'eau de refroidissement à une électronique de puissance (12), appartenant au turbocompresseur (1), d'une machine électrique entraînant l'arbre (6) (10) du turbocompresseur (1).

2. Turbocompresseur selon la revendication 1, **caractérisé en ce que** le système de conduite d'eau (24) achemine de l'eau sous pression aux paliers lisses.

3. Turbocompresseur selon l'une quelconque des revendications précédentes, **caractérisé en ce que** le système de conduite d'eau (24) présente au moins un dispositif de refoulement (16), en particulier une pompe de refoulement.

4. Turbocompresseur selon l'une quelconque des revendications précédentes, **caractérisé en ce que** le système de conduite d'eau (24) est réalisé sous forme de circuit d'eau de refroidissement ou est intégré/intégrable dans un circuit d'eau de refroidissement (14) d'un système de piles à combustible (23).

5. Turbocompresseur selon l'une quelconque des revendications précédentes, **caractérisé en ce que** le boîtier de compresseur (4) présente au moins un canal (15, 18, 19) pour conduire l'eau aux paliers lisses (7, 8, 21) et notamment aussi à l'électronique de puissance (12).

6. Turbocompresseur selon l'une quelconque des revendications précédentes, **caractérisé en ce que** l'au moins un canal (15, 18, 19) est réalisé au moins en partie sous forme de chemise de refroidissement (20), en particulier entourant un stator (11) de la machine électrique (10).

7. Turbocompresseur selon la revendication 6, **caractérisé en ce que** l'eau est conduite depuis le palier lisse (7, 8, 21) dans la chemise de refroidissement (20) ou depuis la chemise de refroidissement (20) dans le palier lisse (7, 8, 21).

8. Turbocompresseur selon la revendication 6, **caractérisé en ce que** l'eau est conduite parallèlement dans le palier lisse (7, 8, 21) et dans la chemise de refroidissement (20).

9. Système de piles à combustible (23) comprenant un turbocompresseur (1) selon l'une ou plusieurs des revendications précédentes.
